Europäisches Patentamt

European Patent Office

Office européen des brevets

(19)

(11) Veröffentlichungsnummer: **0 191 265**
**B1**

(12) EUROPÄISCHE PATENTSCHRIFT

(45) Veröffentlichungstag der Patentschrift:
06.09.89

(51) Int. Cl.⁴: **C 05 D 9/02, C 05 G 1/00**

(21) Anmeldenummer: 85730141.0

(22) Anmeldetag: 15.10.85

(54) Düngemittelsubstrat mit Eisenpulver.

(30) Priorität: 28.12.84 DE 3447898

(43) Veröffentlichungstag der Anmeldung:
20.08.86 Patentblatt 86/34

(45) Bekanntmachung des Hinweises auf die Patenterteilung:
06.09.89 Patentblatt 89/36

(84) Benannte Vertragsstaaten:
AT BE CH DE FR GB IT LI LU NL SE

(56) Entgegenhaltungen:
DE-A- 1 040 050
FR-A- 2 154 298
FR-A- 2 260 406
US-A- 3 073 695
US-A- 3 495 958

(73) Patentinhaber: MANNESMANN Aktiengesellschaft,
Mannesmannufer 2, D-4000 Düsseldorf 1 (DE)

(72) Erfinder: Dautzenberg, Norbert, Dr., Weissdornweg 10,
D-5144 Wegberg-Beeck (DE)
Erfinder: Junker, Alois, Dr., Platanenstrasse 43,
D-4000 Düsseldorf (DE)
Erfinder: Siegmund, Werner, verstorben, (DE)
Erfinder: Linnemann, Viktor, Dipl.-Ing., Schuerenweg 20,
D-4050 Mönchengladbach (DE)

(74) Vertreter: Meissner, Peter E., Dipl.-Ing. et al, Meissner &
Meissner Patentanwälte Herbertstrasse 22,
D-1000 Berlin 33 Grunewald (DE)

## Beschreibung

Die Erfindung betrifft ein streufähiges Düngemittelsubstrat für pflanzliche Vegetation gemäss dem Oberbegriff des Patentanspruchs 1.

Aus der FR-A 2 154 298 ist es bekannt, metallisches Eisen in feinteiliger Form als Düngemittel mit Langzeitwirkung einzusetzen, wobei für die Teilchengrösse eine Siebmaschenweite von 0,149 bzw. 0,044 mm angegeben wird.

Zusätzlich soll das Düngemittel eine inerte Komponente enthalten.

Ferner ist aus der US-PS 3 627 506 die Verwendung eines Eisenpulvers zur Behandlung von Pflanzen bekannt, wobei dieses Eisenpulver aus Gusseisenabfällen hergestellt wird, die zunächst durch Brennen von Öl befreit werden, anschliessend abgekühlt und schliesslich gemahlen werden. Hierbei fallen verschiedene Feinheitsgrade an.

Der Erfindung liegt die Aufgabe zugrunde, das zur Anwendung kommende Eisenpulver bzw. das Düngemittelsubstrat insgesamt so zu verbessern, dass einerseits eine Sofortwirkung erreicht werden kann, andererseits aber auch die Wirkung des Düngemittels über einen längeren Zeitraum gewährleistet ist.

Gelöst wird diese Aufgabe mit den im Kennzeichen des Anspruchs 1 angegebenen Merkmalen.

Vorzugsweise Ausgestaltungen ergeben sich aus den Unteransprüchen.

Bei dem erfindungsgemässen Eisenpulver handelt es sich um ein Gemisch aus spratzigen Teilchen und Teilchen mit geglätteter Oberfläche. Die spratzige Kornform lässt sich durch das bei der Herstellung des Eisenpulvers angewandte Verfahren umschreiben, nämlich das Wasserverdüsverfahren zur Herstellung des niedriggekohlten Eisenpulvers; die geglätte Kornform ergibt sich durch das sog. RZ-Verfahren (Luftverdüsung) zur Herstellung des hochgekohlten und hochsauerstoffhaltigen Eisenpulvers. Das Ergebnis dieser Mischung zeigt einen erheblichen Anteil der spratzigen Kornform, die bei dem niedriggekohlten Eisen der Partikelgruppe 1 dadurch verstärkt wurde, dass diese Pulver zur Erreichung der angegebenen C- und O-Gehalte einer reduzierenden Glühung unterworfen wurden, wodurch es zu einem Aneinanderbacken einzelner Teilchen kommt. Dementsprechend ist die Kornform in ihrer Abweichung von der Kugel- oder Tropfenform im Feinstbereich weniger stark ausgeprägt, als bei den über 0,02 mm liegenden Partikeln. Insofern wird gemäss der Erfindung gegenüber den nach der US-PS 3 627 506 bekannten eisenhaltigen Pulvern eine neue Kornform vorgeschlagen. Im übrigen fehlt bei den nach der US-PS 3 627 506 vorgesehenen feinsten Produkten die Vorschrift, feinste Partikel möglichst anteilmässig zu beschränken. Gerade die feinen Stäube enthalten häufig nur noch das Eisen in seiner höchsten Oxidationsstufe (Fe$_2$O$_3$) und sind damit für den vorgesehenen Zweck unbrauchbar, insbesondere ist es nicht oder nur schwach ferromagnetisch.

Gegenüber dem bisher abgehandelten Stand der Technik schlägt die Erfindung zur Verwendung als Düngemittelsubstrat zur Erhaltung von Baumbeständen – nämlich gegen das Waldsterben – nun nicht nur eine bestimmte Kornform der Eisenpulverpartikel und eine auch nach unten zum Feinen hin begrenzte Kornanalyse vor, sondern führt als weitere wichtige Parameter metallurgische Zusammensetzungen des Eisenpulvers und das Zusammenspiel von Gewichts- und Volumenanteil des Eisenpulvers im Düngemittelsubstrat, jeweils entsprechend den Vorschriften des Patentanspruches 1, ein.

Letztlich ist es Ziel der Erfindung, ein für Flora und Fauna verträgliches Düngemittelsubstrat zu schaffen, dessen Bestandteile gezielt ausgewählt und nicht aus Abfällen zusammengetragen werden. Insofern können auch die bekannten Verfahren zur Herstellung von Metallmehle enthaltenden Mikronährstoffdüngemitteln für Mangelböden nach DI-PS 1 153 388 und die in der Patentanmeldung J 5852 IVb/16 vorgeschlagene Spurenelement-Düngung keine zur Erfindung führenden Hinweise geben.

Es wird nämlich in beiden Fällen vorgeschlagen, von Abfallstoffen auszugehen, nämlich einmal Müllschlackengranulate als Begleitstoff bzw. nicht nichtmetallische Komponente des Düngemittelsubstrates für Metallmehle aus Kupfer, Zink, Messing, Mangan, Kobalt oder Molybdän vorzusehen oder zum anderen Fabrikationsrückstände aus der kupfer-, eisen- und stahlverarbeitenden Industrie mit diese Metallrückstände im Wasser auflösenden Düngemitteln zu kombinieren.

Zusammenfassend lässt sich feststellen, dass nach dem bekannten Stand der Technik die Düngung mit dem Ziel einer Ertragssteigerung durch das Einbringen insbesondere von metallischen Spurenelementen im Vordergrund steht.

Die Erfindung zeigt demgegenüber – ohne Düngeeffekte ausschliessen zu wollen – einen Weg auf, wie weitere Umweltfaktoren zur Erhöhung der Widerstandskraft von Baumbeständen aktiviert werden können. Als wichtiger Faktor wird hier das magnetische Umfeld der Bäume angesehen, welches durch die Verwendung ferromagnetischen Eisenpulvers positiv beeinflusst werden kann. Dabei gilt es, örtliche Überdosierungen von Eisenpulver zu vermeiden, wofür dadurch gesorgt wird, dass der Eisenpulveranteil im Düngemittelsubstrat volumenmässig 30% nicht überschreiten soll. So wird auch beim grossflächigen Ausstreuen eine gleichmässigere Verteilung des Eisenpulvers erreicht.

Eine abgerundete Oberfläche sichert dem einzelnen Eisenkorn eine relativ lange Lebensdauer; die spratzige Form bietet dagegen eine auf das Teilchenvolumen bezogen grosse aktive Oberfläche. Da beide Anteile sich über eine entsprechende Partikelmischung beliebig einstellen lassen, können Wirkungsdauer und Wirkungsgeschwindigkeit des Substrates beeinflusst werden.

Gemäss Patentanspruch 2 ist vorgesehen, dass das verwendete Eisenpulver aus zwei Partikelgruppen unterschiedlicher metallurgischer Zusammensetzungen besteht, wobei das Schwergewicht auf unterschiedlichen Kohlenstoffgehalten liegt. Den in Patentanspruch 2 niedergelegten Analysenbereichen entsprechen die nachfolgend in Tabelle 1 aufgeführten Partikelgruppen, die im Verhältnis 1 : 1 eingesetzt sein könnten.

Tabelle 1

| Partikelgruppe 1 (reduziertes Pulver) | Partikelgruppe 2 (unreduziertes Pulver) |
|---|---|
| Teilchenform: | |
| spratzig | abgerundet |
| Oberfläche: | |
| o. Oxidhaut | stark oxidiert |
| C   0,01–0,1% | 3–6% |
| O   0,05–0,3% | 4–8% |
| Fe   Rest | Rest |

mit Ausnahme der erschmelzungsbedingten Verunreinigungen Si, Mn, P, S, Cr, Cu etc.

Möglich sind aber auch andere Mischungen, wobei diese aber unter Beachtung folgender Massgaben hergestellt werden sollten. Das reduzierte Eisenpulver enthält im Vergleich zum unreduzierten Pulver wenig Kohlenstoff und Sauerstoff. Letzteres dient aber – wie es sich gezeigt hat – als eine Art Keimbildner oder Initiator für den Reaktionsablauf. Die Langzeitwirkung, die Sofortwirkung und der Magnetismus lassen sich also durch entsprechende Wahl des Pulvers im Sinne des Patentanspruches 2 und das Mischungsverhältnis der Pulver beeinflussen.

Gemäss Patentanspruch 3 ist vorgesehen, dass die aus organischem und/oder mineralischem Material bestehenden nichtmetallischen Komponenten des Düngemittelsubstrats das Ergebnis eines Zerkleinerungsvorganges sind, dessen Endstufe bei Anwesenheit des Eisenpulvers, jedoch unter weitgehender Erhaltung der Korngrösse des Eisenpulvers durchgeführt worden ist. Diese Vorschrift lässt sich durch einen auf den Einsatz kinetischer Energie beruhenden Mahlvorgang problemlos realisieren, wobei die weicheren nichtmetallischen Komponenten mittelbar über die Eisenpulverpartikel intensiv zerkleinert werden, die nichtmetallischen Komponenten aber auch elastische Puffer zwischen den Eisenpartikeln sind.

Bei der Auswahl an nichtmetallischen Komponenten greift die Erfindung bevorzugt auf die in Patentanspruch 4 niedergelegten Stoffe zurück und sieht vor, dass die nichtmetallische Komponente aus organischem Material wie Zellstoff, Sägemehl, zerkleinerter Baumrinde, Polystyrolschaum, Kalkmehl, Lavamehl jeweils einzeln und/oder gemeinsam eingesetzt besteht.

Für das grossflächige Ausstreuen des Düngemittelsubstrats aus der Luft sollte auf nichtmetallische Komponenten natürlichen organischen Ursprungs wie auf das Sägemehl oder zerkleinerte Baumrinde zurückgegriffen werden, weil sich ein derartiges Düngemittelsubstrat, welches ausstreuungsbedingt zu einem gewissen Teil an Blättern und an Tannennadeln haften bleibt, der Pflanze gegenüber neutral verhält und somit zu keinen unbeabsichtigten Beeinträchtigungen führt. Das gleiche gilt für die Tiere des Waldes, wenn sie mit der Nahrung Spuren des Düngemittelsubstrates aufnehmen.

Wenngleich die Erfindung gerade das Waldsterben bekämpfen bzw. dem Waldsterben vorbeugend entgegenwirken soll, so ist ergänzend festzustellen, dass das erfindungsgemässe Düngemittelsubstrat gerade in der nach Patentanspruch 4 gestalteten Zusammensetzung auch vorteilhafte Wirkungen auf sonstige pflanzliche Vegetation entfalten kann. Dabei hat sich die Kombination Eisenpulver – Polystyrolschaum – Lavamehl besonders bewährt. Im Vergleich zu unter normalen Bedingungen aufgewachsenen Tomatenpflanzen zeigten Tomatenpflanzen gleicher Art und gleichen Ursprungs in einem mit geringen Mengen des Eisenpulver – Polystyrolschaum – Lavamehl durchsetzten Kulturboden höheren Wuchs, einen kräftigeren Stamm und satteres Grün in den Blättern. Mit Eisenpulver überdüngte Tomatenpflanzen dagegen bleiben im Wuchs zurück; Überdüngung führte also zum Zwergenwuchs.

Als überraschendes Nebenergebnis konnte festgestellt werden, dass sich in mit dem erfindungsgemässen Eisenpulver in mässiger Dosierung durchsetzten Böden Regenwürmer gut entwickeln und vermehren. Offensichtlich stört dieses Pulvergemisch, das ein gegenüber gemahlenem Eisenpulver von Spitzen und scharfen Brechkanten freies Eisenpulverkorn aufweist, den Organismus des Regenwurmes nicht.

Generell belegen alle bisherigen Beobachtungen, dass gerade nach dem RZ-Verfahren durch Verdüsen hergestelltes und von feinsten ggf. schädlichen Partikeln freies Eisenpulver ein für Fauna und Flora verträglicher umweltfreundlicher Stoff ist, der auch nach ersten, wissenschaftlich noch zu erhärtenden Erkenntnissen die Symbiose zwischen Pilzen und Pflanzen, deren Funktionieren für die Erhaltung der Wälder eine zentrale Bedeutung zukommen dürfte, zumindest nicht nachteilig beeinflusst.

**Patentansprüche**

1. Streufähiges Düngemittelsubstrat für pflanzliche Vegetation, das metallisches Eisen in feinteiliger Form mit beschränkter Teilchengrösse und mindestens eine nichtmetallische Komponente enthält, dadurch gekennzeichnet, dass das Eisen als ferromagnetisches Eisenpulver vorliegt, welches aus einem Gemisch von Teilchen mit spratziger Form und von Teilchen mit geglätteter Oberfläche besteht, dass das Eisenpulver zu 60 Gewichts-% Eisenpartikel unter 0,05 mm und zu 90 Gewichts-% Eisenpartikel über 0,005 mm enthält, dass der Kohlenstoffgehalt des Eisenpulvers 1,5 – 3% und der Sauerstoffgehalt 2,0 – 4,2% beträgt (Rest Eisen und erschmelzungsbedingte Verunreinigungen) und dass das Eisenpulver bezogen auf die Gesamtmenge der nichtmetallischen Komponente/n mit einem Gewichtsanteil von 20 – 80% und einem Volumenanteil von unter 30% statistisch gleichmässig auf das Düngemittelsubstrat verteilt ist.

2. Düngemittelsubstrat nach Anspruch 1, dadurch gekennzeichnet, dass die erste Partikelgruppe des Eisenpulvers mit spratziger Form dem Analysenbereich

$$C = 0,01 - 0,1\%$$
$$O = 0,05 - 0,3\%$$

und die zweite Partikelgruppe mit geglätteter Kornoberfläche dem Analysenbereich

$$C = 3 - 6\%$$
$$O = 4 - 8\%$$

zuzuordnen ist.

3. Düngemittelsubstrat nach Anspruch 1 oder 2, dadurch gekennzeichnet, dass die erste Partikelgruppe durch Wasserverdüsung und die letztere durch Luftverdüsung einer Eisenschmelze hergestellt worden ist.

4. Düngemittelsubstrat nach einem der Ansprüche 1 bis 3, dadurch gekennzeichnet, dass die aus organischem und/oder mineralischem Material bestehende nichtmetallische Komponente bzw. nichtmetallischen Komponenten körnungsmässig das Ergebnis eines Zerkleinerungsvorganges ist bzw. sind, dessen Endstufe bei Anwesenheit des Eisenpulvers, jedoch unter weitgehender Erhaltung der Korngrösse des Eisenpulvers durchgeführt worden ist.

5. Düngemittelsubstrat nach einem der Ansprüche 1 bis 4, dadurch gekennzeichnet, dass die nichtmetallische Komponente aus organischem Material wie Zellstoff, Sägemehl, zerkleinerter Baumrinde oder Polystyrolschaum besteht.

## Claims

1. A scatterabe fertilizer substrate for plant vegetation which contains metallic iron in finely granulated form with a limited particle size and at least one non-metallic component, characterised in that the iron is in the form of ferromagnetic iron powder which consists of a mixture of particles of irregular shape and particles with a smoothed surface, that the iron powder contains 60% by weight of iron particles of less than 0,05 mm and 90% by weight of iron particles exceeding 0.005 mm, that the carbon content of the iron powder is 1.5 – 3% and the oxygen content is 2.0 – 4.2% (remainder iron and impurities arising from the melt) and that the iron powder, relative to the total quantity of non-metallic component(s) is distributed with statistical uniformity in the fertilizer substrate with a proportion by weight of 20 – 80% and a proportion by volume of less than 30%.

2. A fertilizer substrate according to Claim 1, characterised in that the first particle group of the iron powder with the irregular shape is to be assigned to the analysis range

$$C = 0.01 - 0.1\%$$
$$O = 0.05 - 0.3\%$$

and the second particle group with the smoothed granule surface is to be assigned to the analysis range

$$C = 3 - 6\%$$
$$O = 4 - 8\%$$

3. A fertilizer substrate as claimed in Claim 1 or 2, characterised in that the first particle group has been produced by water atomisation, and the second particle group by air atomisation, of an iron melt.

4. A fertilizer substrate as claimed in one of Claims 1 to 3, characterised in that the granulation of the non-metallic component or components which consist(s) of organic and/or mineral material is the result of a crushing process, the final stage of which has been carried out in the presence of the iron powder but with substantial retention of the size of the granules of the iron powder.

5. A fertilizer substrate as claimed in one of Claims 1 to 4, characterised in that the non-metallic component consists of organic material such as cellulose, sawdust, comminuted tree bark or polystyrene foam.

## Revendications

1. Substrat d'engrais diffusable pour végétaux, qui comporte du fer métallique sous forme finement divisée ayant une granulométrie limitée et au moins un composant non métallique, caractérisé en ce que le fer existe en tant que poudre de fer ferromagnétique, laquelle est constituée d'un mélange de particules de forme irrégulière et de particules à surface lisse, en ce que la poudre de fer comporte 60% en poids de particules de fer de moins de 0,05 mm et 90% en poids de particules de fer de plus de 0,005 mm, en ce que la teneur en carbone de la poudre de fer s'élève à 1,5-3% et la teneur en oxygène à 2,0-4,2% (le restant étant du fer et des impuretés dépendant de l'élaboration), et en ce que la poudre de fer avant une proportion pondérale de 20-80% et une proportion volumique inférieure à 30% par rapport à la quantité totale du ou des composants non métalliques est régulièrement statistiquement répartie sur le substrat d'engrais.

2. Substrat d'engrais selon la revendication 1, caractérisé en ce que le premier groupe de particules de la poudre de fer de forme irrégulière présente les teneurs suivantes:

$$C = 0,01 - 0,1\%$$
$$O = 0,05 - 0,3\%$$

et le second groupe de particules à surface lisse:

C = 3 – 6%
O = 4 – 8%

3. Substrat d'engrais selon la revendication 1 ou 2, caractérisé en ce que le premier groupe de particules est obtenu par atomisation aqueuse et le second par atomisation par de l'air d'une masse fondue de fer.

4. Substrat d'engrais selon une des revendications 1 à 3, caractérisé en ce que le ou les composants non métalliques, constitués d'une matière minérale et/ou organique, sont, en ce qui concerne la granulométrie, le résultat d'un processus de broyage, dont l'étape finale est réalisée en présence de la poudre de fer, en maintenant cependant largement la granulométrie de la poudre de fer.

5. Substrat d'engrais selon une des revendications 1 à 4, caractérisé en ce que le composant non métallique est constitué d'une matière organique comme de la cellulose, de la sciure de bois, de l'écorce broyée ou de la mousse de polystyrène.